(19) Europäisches Patentamt

European Patent Office

Office européen des brevets

(11) **EP 1 273 936 A2**

(12) **EUROPEAN PATENT APPLICATION**

(43) Date of publication:
**08.01.2003 Bulletin 2003/02**

(51) Int Cl.[7]: **G02B 6/12**, G02B 6/34

(21) Application number: **02254682.4**

(22) Date of filing: **03.07.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI** | (72) Inventors:<br>• **Nara, Kazutaka**<br>  **2-chrome Chiyoda-ku Tokyo 100-8322 (JP)**<br>• **Kashihara, Kazuhisa**<br>  **2-chrome Chiyoda-ku Tokyo 100-8322 (JP)** |
| (30) Priority: **03.07.2001 JP 2001202413** | (74) Representative: **Dealtry, Brian et al**<br>**Eric Potter Clarkson,** |
| (71) Applicant: **THE FURUKAWA ELECTRIC CO., LTD.**<br>**Tokyo 100-8322 (JP)** | **Park View House,**<br>**58 The Ropewalk**<br>**Nottingham NG1 5DD (GB)** |

(54) **Optical waveguide**

(57) An optical waveguide of the invention is formed by depositing an underclad (1b) on a silicon substrate (11), by forming thereon a core (2) having, for instance, an arrayed waveguide grating circuit, and by covering the core with an overclad (1a), and, without disposing a half wave plate, can suppress an influence of polarization dependency attenuation and deterioration due to moisture absorption. An arrayed waveguide grating circuit includes at least one input waveguide, a first slab waveguide, an arrayed waveguide made of a plurality of channel waveguides arranged side by side with lengths different by a predetermined amount from each other, a second slab waveguide, and an output waveguide. The clad and the core are made of silica-based glass. When the thermal expansion coefficient of the substrate is $\alpha_s$, that of the underclad $\alpha_{uc}$, and that of the overclad $\alpha_{oc}$, $\alpha_{oc}$ is equal to or greater than $(\alpha_s - 2.0 \times 10^{-7})$ and equal to or smaller than $(\alpha_s + 2.0 \times 10^{-7})$, and $(\alpha_{oc} - \alpha_{uc})$ is equal to or smaller than $(21.5 \times 10^{-7})$.

Fig.6D

**Description**

Field of the Invention

The present invention relates to an optical waveguide for use in optical communication, such as, for instance, an arrayed waveguide grating.

Background of the Invention

In recent years, in optical communication, as a method for drastically increasing a transmission capacity thereof, optical wavelength division multiplexing is in an active study and in advance in practical applications. In the optical wavelength division multiplexing, for instance, a plurality of lights having wavelengths different from one another is wavelength division multiplexed and transmitted. In such an optical wavelength division multiplexing system, it is indispensable to dispose an optical transmission element in the system. In order to enable to pick up a light having each wavelength from a plurality of transmitted lights at a light receiving side, the optical transmission element is transparent only to a light having a predetermined wavelength and outputs it from a predetermined output port.

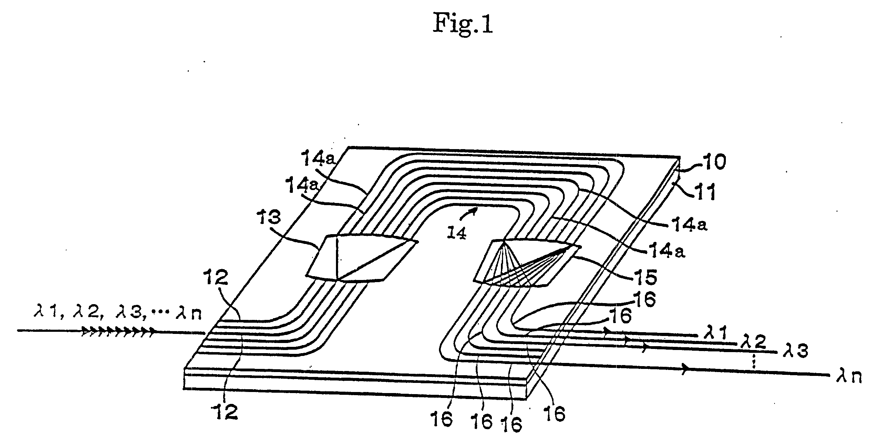

As an example of the optical transmission element, there is an arrayed waveguide grating (AWG; Arrayed Waveguide Grating) as shown in, for instance, Fig. 1. An optical waveguide such as the arrayed waveguide grating comprises a substrate 11 and a waveguide formation region 10. The waveguide formation region 10 comprises an underclad formed on the substrate 11, a core formed on the underclad and an overclad covering the core. The substrate 11 is a silicon substrate, for instance.

The core forms a circuit of each optical waveguide. A circuit of the arrayed waveguide grating is, as shown in Fig. 1, comprises at least one input waveguide 12, a first slab waveguide 13 connected to an exit side of the input waveguide 12, an arrayed waveguide 14 connected to an exit side of the first slab waveguide 13, a second slab waveguide 15 connected to an exit side of the arrayed waveguide 14 and an output waveguide 16 connected to an exit side of the second slab waveguide 15. The output waveguides 16 are plurally arranged side by side.

The arrayed waveguide 14 transmits a light derived out of the first slab waveguide 13. The arrayed waveguide 14 is formed by arranging a plurality of channel waveguides 14a side by side, and adjacent channel waveguides 14a are different in length by a predetermined amount ($\Delta$L) from each other.

Usually, a large number, such as, for instance, 100 pieces of the channel waveguides 14a is arranged and forms the arrayed waveguide 14. In addition, the number of the output waveguides 16 is corresponded to the number of signal lights that are demultiplexed or multiplexed by use of, for instance, an arrayed waveguide grating and are different in wavelength from each other. However, in Fig. 1, for simplicity's sake of the drawing, each number of the channel waveguides 14a, the output waveguides 16 and the input waveguides 12 is shown in a simplified way.

For instance, a transmitting side optical fiber (not shown in the figure) is connected to the input waveguide 12, and a wavelength-multiplexed light is introduced therein. For instance, a light that propagates through one input waveguide 12 and is input into the first slab waveguide 13 spreads due to its diffraction, enters the arrayed waveguide 14 and propagates through the arrayed waveguide 14. The light that has propagated through the arrayed waveguide 14 reaches the second slab waveguide 15 is focused into the output waveguides 16 and output therefrom.

Since all of the channel waveguides 14a that form the arrayed waveguide 14 is different in length from each other, after propagating through the arrayed waveguide 14, there occur phase differences between individual lights and a phasefront of the focused light inclines according to an amount of the phase difference. Since a focusing position is determined according to an angle of this inclination, focusing positions of lights having different wavelengths are different from each other. When an output waveguide 16 is formed at each focusing position, each light different in wavelength from each other may be output from the different output waveguide 16 for each wavelength.

For instance, as shown in Fig. 1, wavelength-multiplexed lights having wavelengths $\lambda$1, $\lambda$2, $\lambda$3, $\cdots$, $\lambda$n (n is an integer) are input from one input waveguide 12. These lights are spread by the first slab waveguide 13 and reach the arrayed waveguide 14, propagate through the second slab waveguide 15 and are focused, as mentioned above, at positions different according to wavelength, and enter into output waveguides 16 different from each other.

The lights having respective wavelengths propagate through the respective output waveguides 16 and are output from exit ends of the respective output waveguides 16. When an optical fiber (not shown in the figure) for use in outputting is connected to the exit end of each output waveguide 16, through the optical fibers, the lights having the respective wavelengths can be taken out.

In an arrayed waveguide grating, a wavelength resolving power of a diffraction grating is proportional to the difference (($\Delta$L) of lengths of the respective channel waveguides 14a. Accordingly, by setting $\Delta$L larger, a wavelength-multiplexed light having a narrow wavelength separation that has not been realized by use of an existing diffraction grating may be multiplexed/demultiplexed.

Accordingly, the arrayed waveguide grating can multiplex and demultiplex a plurality of signal lights, which is a function considered necessary for realizing high density optical wavelength division multiplexing. That is, the arrayed waveguide grating can demultiplex and multiplex a plurality of light signals having a wavelength separation of 1 nm or less.

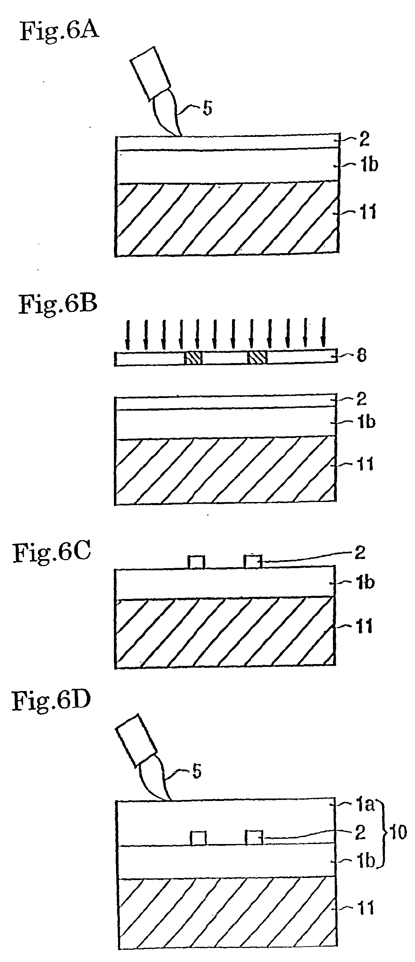

In Fig. 6A through Fig. 6D, typical processes for fabricating an arrayed waveguide grating are shown. In the following, a method for fabricating an optical waveguide will be explained with reference to Fig. 6A through Fig. 6D. A process shown in Fig. 6A is a process in which a film of underclad 1b and a film of core 2 are sequentially formed on a substrate 11 by use of flame hydrolysis deposition and consolidating. Reference numeral 5 in Fig. 6A denotes a flame of a burner used in flame hydrolysis deposition.

A process shown in Fig. 6B is a process for processing the film of core 2. In the processing of the film of core 2, by use of a mask 8 photolithography and reactive ion etching are applied. Due to the processing, as shown in Fig. 6C, an optical waveguide pattern of the arrayed waveguide grating is formed, and thereby a core 2 having the above circuit configuration is formed.

A process shown in Fig. 6D is a process for forming a film of overclad 1a covering the core 2. The film of the overclad 1a is formed by piling up fine particles of overclad glass by use of flame hydrolysis deposition followed by consolidating the fine powder of the overclad glass at temperatures in the range of, for instance, 1200 to 1250 degrees Celsius. Reference numeral 5 in Fig. 6D denotes a flame of a burner used in flame hydrolysis deposition.

The overclad 1a has been formed so far by use of silica-based glass in which, for instance, each of $B_2O_3$ and $P_2O_5$ is mixed by 5% by mole with pure silica.

Since the arrayed waveguide grating as mentioned above is applied as a light transmission element for use in the optical wavelength division multiplexing, polarization dependency attenuations of a TE mode and a TM mode in the arrayed waveguide grating are desirable to be as near zero as possible.

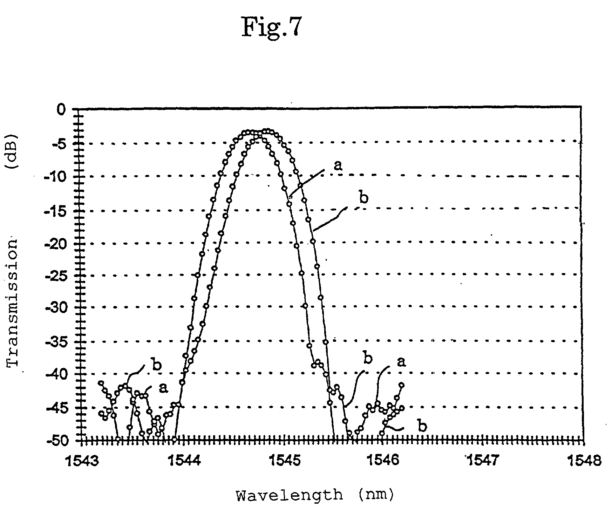

However, in the existing arrayed waveguide grating, the polarization dependency attenuation is large. A characteristic curve a in, for instance, Fig. 7 shows an example of a transmission spectrum of the TE mode of the existing arrayed waveguide grating, and a characteristic curve b a transmission spectrum of the TM mode thereof. As shown in characteristic curves a and b in Fig. 7, the polarization dependency attenuations in the range of a central wavelength ±0.1 nm of the transmission spectra of the TE mode and TM mode of the arrayed waveguide grating are 3 dB.

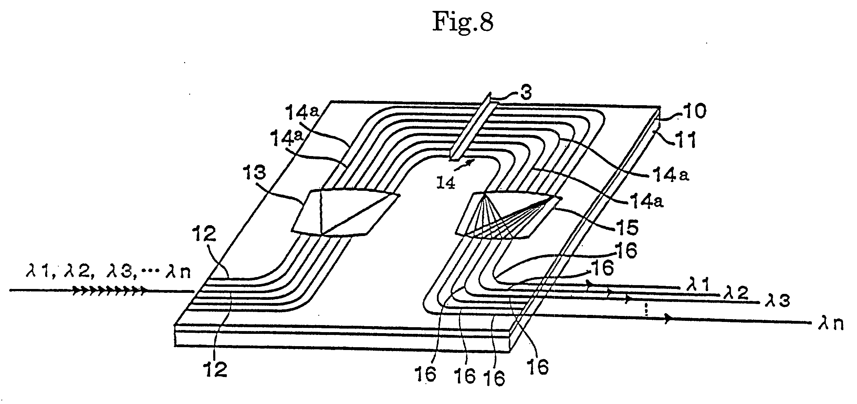

In order to compensate the polarization dependency attenuation, in the existing arrayed waveguide grating, as shown in Fig. 8, in the middle of the arrayed waveguide 14, a half wave plate 3 made of, such as, polyimide is inserted. The half wave plate 3 is disposed so as to intersect all the channel waveguides 14a. In the arrayed waveguide grating thus provided with the half wave plate 3, a plane of polarization of a polarized wave is rotated by 90 degrees between an enter side and an exit side of the half wave plate 3. Accordingly, an influence due to the polarization dependency attenuation may be avoided.

The half wave plate 3 is not restricted to one made of polyimide, and may be one made of silica-based glass. When the half wave plate 3 is made of polyimide, a thickness thereof can be made thinner. Accordingly, as the half wave plate 3 available for the existing arrayed waveguide grating, one made of polyimide is most excellent.


SUMMARY OF THE INVENTION

An optical waveguide of the invention comprises

a substrate;
an underclad formed on the substrate;
a core formed on the underclad; and
an overclad covering the core;

wherein, when the thermal expansion coefficient of the substrate is $\alpha_s$, that of the underclad $\alpha_{uc}$, and that of the overclad $\alpha_{oc}$,

$\alpha_{oc}$ is equal to or greater than $(\alpha_s - 2.0 \times 10^{-7})$ and equal to or smaller than $(\alpha_s + 2.0 \times 10^{-7})$, and $(\alpha_{oc} - \alpha_{uc})$ is equal to or smaller than $(21.5 \times 10^{-7})$.


BRIEF DESCRIPTION OF THE DRAWINGS

Exemplary embodiments of the invention will now be described in conjunction with the drawings, in which:

Fig. 1 is an explanatory view typically showing an example of a configuration of an arrayed waveguide grating;
Fig. 2 is a graph showing a transmission spectrum for each polarized wave in one embodiment of an optical waveguide according to the invention;
Fig. 3 a typical explanatory view of crack occurrence due to the moisture absorption of the optical waveguide;

Fig. 4 is a speculative explanatory view of a crack occurrence cause due to the moisture absorption of the optical waveguide;

Fig. 5 is a graph showing relationship between thermal expansion coefficient difference of an underclad and an overclad of the optical waveguide and crack length;

Fig. 6A is an explanatory sectional view showing a process for forming a film of underclad and a film of core on a substrate in a fabricating process of an arrayed waveguide grating;

Fig. 6B is an explanatory sectional view showing a process for processing the film of core in a fabricating process of an arrayed waveguide grating;

Fig. 6C is an explanatory sectional view showing a state of the core formed by processing the film of core in a fabricating process of an arrayed waveguide grating;

Fig. 6D is an explanatory sectional view showing a process for forming a film of overclad on an upper side of the core in a fabricating process of an arrayed waveguide grating.

Fig. 7 is a graph showing a transmission spectrum of each polarized wave in the existing arrayed waveguide grating.

Fig. 8 is an explanatory view typically showing the existing arrayed waveguide grating provided with a half wave plate.

DETAILED DESCRIPTION

Although the arrayed waveguide grating provided with the half wave plate 3 may avoid an adverse influence of the polarization dependency attenuation, there are following problems. That is, there is a problem in that in thus configured arrayed waveguide grating, a light that enters the half wave plate 3 is partially returned to an enter side of the optical waveguide 12. This is a so-called return-loss problem. A value of the return-loss amounts to substantially -35 dB when, for instance, the half wave plate 3 is inserted so as to be perpendicular to the respective channel waveguides 14a of the arrayed waveguide 14.

In an element for use in the optical wavelength division multiplexing system, the return loss greater than -40 dB may cause trouble in optical communication. Accordingly, when the return loss of the above value is caused, the arrayed waveguide grating may not be applied to the optical wavelength division multiplexing.

When the half wave plate 3 is inserted so as to incline by an angle of 8 degree with respect to an axis orthogonal to the channel waveguides 14a, the return loss may be made substantially -40 dB. However, in this case, even when a thin polyimide half wave plate 3 is applied, a slit for inserting the half wave plate 3 is difficult to form and the half wave plate 3 is technically difficult to insert. As a result, there is a problem in that the production yield of the arrayed waveguide grating becomes low.

In addition, a presently available polyimide half wave plate 3 is substantially 8 mm in length. When the channel waveguides 14a are attempted to be arranged side by side with a separation of 25 $\mu$m, only 320 channel waveguides 14a are allowed to be arranged at most. That is, in the arrayed waveguide grating provided with the half wave plate 3, there is a restriction on the number of the channel waveguides 14a. Accordingly, it may be difficult to cope with the situations when in future the number of the channel waveguides 14a is attempted to be increased to realize an arrayed waveguide grating having a narrower wavelength separation.

Furthermore, when the length of the polyimide half wave plate 3 is attempted to be increased, the production yield of the half wave plate itself becomes lower, resulting in higher costs of the arrayed waveguide grating.

Furthermore, in order to form an arrayed waveguide grating by inserting the half wave plate 3, an insertion slit for inserting the half wave plate 3 is processed by use of a dicer, the half wave plate 3 is inserted in the slit, and furthermore by use of an adhesive the half wave plate 3 has to be fixed. As a result, when arranging the half wave plate 3, the number of the fabricating processes of the arrayed waveguide grating increases, resulting in higher costs of the arrayed waveguide grating.

In order to overcome various problems due to the insertion of the half wave plate 3, a proposal has been disclosed in Japanese Patent Laid-open No. 2000-380. In the proposal, by bringing the thermal expansion coefficient of an overclad closer to the linear expansion coefficient of a substrate, without inserting the half wave plate 3, the polarization dependency attenuation is attempted to be reduced. According to the proposal, since the polarization dependency attenuation may be reduced without inserting the half wave plate 3, the problems accompanying the insertion of the half wave plate 3 may be solved.

However, in the above proposal, in order to bring the thermal expansion coefficient of the overclad closer to the linear expansion coefficient of silicon substrate, for instance, dopant concentrations of $B_2O_3$ and $P_2O_5$ that are doped in pure silica glass are increased than those in an overclad in an conventional arrayed waveguide grating.

Accompanying the increase in the dopant concentrations like this, under very severe conditions of high temperature and high humidity, the optical waveguide may be deteriorated in its characteristics due to the absorption of moisture. In consideration of this likelihood of deterioration, the present inventors propose a configuration of an optical waveguide that may allow both of suppressing polarization dependency attenuation and characteristics deterioration due to absorption of moisture. The severe conditions of high temperature and high humidity are, for instance, 120 degrees Celsius and 100% RH.

In proposing a configuration of an optical waveguide that may allow both of suppressing polarization dependency attenuation and characteristics deterioration that are caused due to the absorption of moisture, the present inventors considered a configuration that can suppress the polarization dependency attenuation on the basis of the above proposal. In addition, in order to suppress the characteristics deterioration due to the moisture absorption from occurring, the present inventors paid attention to the thermal expansion coefficient of glass.

In general, when moisture is absorbed in glass, the thermal expansion coefficient thereof becomes larger. Accordingly, when an overclad of an optical waveguide is formed by use of silica glass containing a high concentration of a highly hygroscopic dopant such as, for instance, $B_2O_3$ and $P_2O_5$, when, for instance, pressure cooker test of the optical waveguide is performed, the dopant in the overclad reacts with moisture, resulting in an increase in the thermal expansion coefficient.

On the other hand, when a dopant concentration in an underclad of the optical waveguide is low, when, for instance, the pressure cooker test is performed, since the dopant hardly reacts with the moisture in the underclad, the thermal expansion coefficient will not become larger.

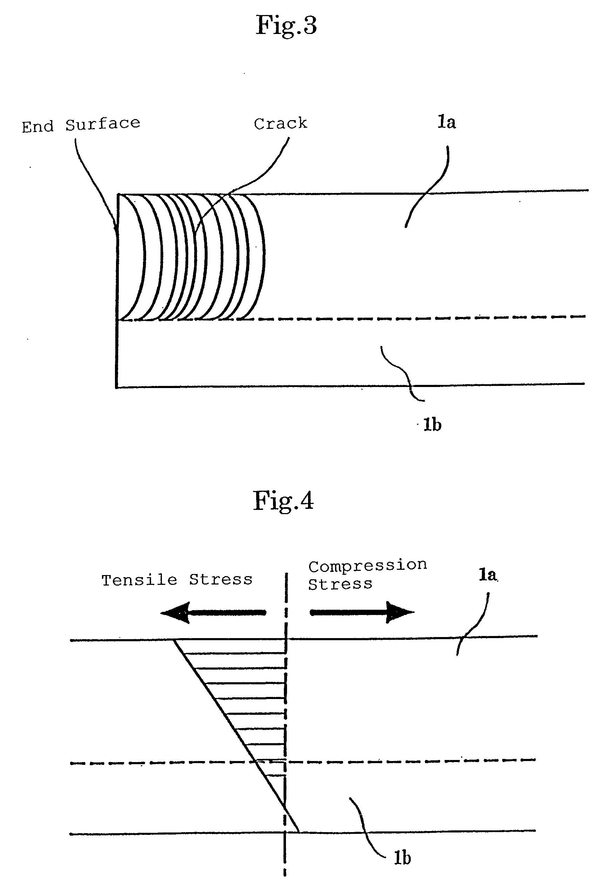

Then, the present inventors have hypothesized as follows. That is, "When an optical waveguide whose overclad is doped with a high concentration of a highly hygroscopic dopant is in an atmosphere of high temperature and high humidity, for instance, 120 degrees Celsius and 100% RH, the thermal expansion coefficient of the overclad becomes larger than that of the underclad. When the difference of the thermal expansion coefficients is large, as shown in Fig. 4, tensile stress is applied on an overclad side at an interface between the overclad and the underclad. Due to the tensile stress, as shown in Fig. 3, the overclad cracks from the interface between the overclad and the underclad."

Accordingly, the present inventors considered to increase the concentration of the dopant, such as $B_2O_3$ and $P_2O_5$, in the overclad and to increase an amount of the dopant that is doped in the underclad. This configuration may enable to reduce the difference between the thermal expansion coefficient of the underclad and that of the overclad when the optical waveguide absorbs the moisture in an atmosphere of high temperature and high humidity.

As a result, as mentioned above, the configuration in which an amount of the dopant in the overclad of the optical waveguide and an amount of the dopant in the underclad thereof are increased may allow suppressing the cracking from occurring, and, as mentioned in the above proposal, may suppress also the polarization dependency attenuation at, for instance, 1.55 μm wavelength band from occurring.

On the basis of the above consideration, the present inventors deposited an underclad and an overclad sequentially on a substrate, cut it in a 30 mm square, and thereby prepared an optical waveguide chip. The pressure cooker test was applied on this chip. The pressure cooker test was performed by exposing the optical waveguide chip in an atmosphere of 120 degrees Celsius and 100% RH for 100 hrs. By measuring a length of the crack from an end surface of the optical waveguide, relationship between the amount of the dopant in the underclad and a degree of crack occurrence in the overclad is obtained.

At the experiment, a composition of the overclad is controlled so that the thermal expansion coefficient of the overclad may be in the range of a thermal expansion coefficient of silicon substrate set at $\pm 2.0 \times 10^{-7}$. That is, when the thermal expansion coefficient of the substrate is $\alpha_s$ and that of the overclad $\alpha_{oc}$, the composition of the overclad and the thermal expansion coefficient is controlled to be constant so that $\alpha_{oc}$ may be equal to or larger than ($\alpha_s - 2.0 \times 10^{-7}$) and equal to or smaller than ($\alpha_s + 2.0 \times 10^{-7}$). In the above, each thermal expansion coefficient is expressed in terms of (degrees Celsius)$^{-1}$.

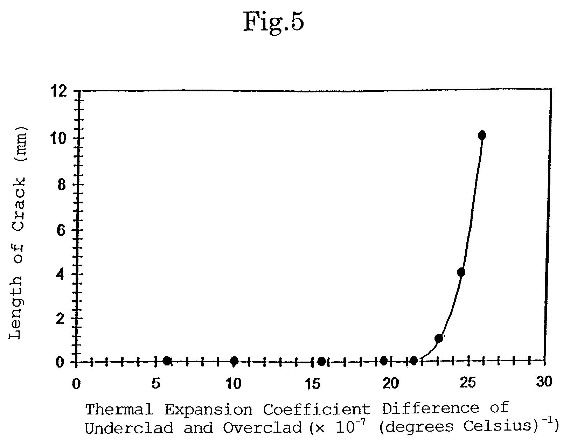

As a result, as shown in Fig. 5, it is experimentally confirmed that by increasing an amount of the dopant in the underclad and by making smaller the difference of the thermal expansion coefficients of the overclad and underclad, the crack can be suppressed from occurring. A critical point in the suppression of the crack occurrence is found to be $21.5 \times 10^{-7}$ (degrees Celsius)$^{-1}$ in terms of the difference of the thermal expansion coefficient of the overclad and that of the underclad.

The present invention is configured based on the above observations. In the following, embodiments of the present invention will be detailed with reference to the drawings. In the explanation of the embodiments of the invention, the same portions having the same names as the existing example are given the same reference numerals and explanations thereof are omitted.

One embodiment of an optical waveguide according to the invention is an arrayed waveguide grating shown in Fig. 1. The arrayed waveguide grating in one embodiment is configured so that when the thermal expansion coefficient of the substrate 11 is $\alpha_s$, that of the underclad 1b $\alpha_{uc}$, and that of the overclad 1a $\alpha_{oc}$, $\alpha_{oc}$ may be equal to or greater than ($\alpha_s - 2.0 \times 10^{-7}$) and equal to or smaller than ($\alpha_s + 2.0 \times 10^{-7}$), and ($\alpha_{oc} - \alpha_{uc}$) may be equal to or smaller than ($21.5 \times 10^{-7}$).

In one embodiment, the substrate 11 is silicon and the thermal expansion coefficient thereof, $\alpha_s$, is $3.0 \times 10^{-6}$. To this value of $\alpha_s$, in the embodiment, the thermal expansion coefficient of the overclad 1a, $\alpha_{oc}$, is set at $2.95 \times 10^{-6}$ and that of the underclad 1b, $\alpha_{uc}$, is set at $1.0 \times 10^{-6}$. Thereby, the above relationship is satisfied.

In one embodiment, the overclad 1a is made of silica-based glass ($SiO_2$-$B_2O_3$-$P_2O_5$ base) in which each of $B_2O_3$ and $P_2O_5$ is added to pure silica by substantially 8% by mole. In this embodiment, by making the overclad 1a in the above composition, the above relationship between the thermal expansion coefficient of the overclad 1a, $\alpha_{oc}$, and that of the substrate 11 (silicon substrate in this case), $\alpha_s$, is allowed to be satisfied. Furthermore, in the embodiment, by making the overclad 1a in the composition, a value of birefringence B occurring in an optical waveguide formation region 10 is set so that an absolute value of B is equal to or smaller than $5.34\times10^{-5}$.

In one embodiment, by setting the value of birefringence at the above values and without providing a half wave plate 3 with which the existing arrayed waveguide grating is provided, an adverse influence of the polarization dependency attenuation may be reduced. Thereby, an optical waveguide suitable for optical wavelength division multiplexing is formed. Details of the relationship between the value B of birefringence and the polarization dependency attenuation are disclosed in the Japanese Patent Laid-Open No. 2000-380.

Furthermore, in one embodiment, the underclad 1b is made of silica-based glass, that is, $SiO_2$-$B_2O_3$-$P_2O_5$ glass. Furthermore, the core 2 is made of silica-based glass, that is, $SiO_2$-$B_2O_3$-$P_2O_5$-$GeO_2$ glass so that relative refractive index difference $\Delta$ may be 0.8%. A film thickness of the underclad 1b is 20 $\mu$m, that of the overclad 1a is 30 $\mu$m, and that of the core 2 is 6.5 $\mu$m. As a fabricating method of the optical waveguide, the method shown in Fig. 6A through Fig. 6D is applied.

In one embodiment, the thermal expansion coefficients of the overclad 1a and the underclad 1b are measured according to the following method. That is, the present inventors, first, formed, on the silicon substrate 11, a sample S1 in which a 20 $\mu$m film made of the same material as that of the underclad that is applied in one embodiment is deposited and a sample S2 in which a 30 $\mu$m film made of the same material as that of the overclad 1a that is applied in one embodiment is deposited. Thereafter, each of the samples S1 and S2 is measured of a radius of warp.

On the basis of each radius of warp of the samples S1 and S2, the thermal expansion coefficients of the overclad 1a and the underclad 1b are obtained according to the following calculation.

When internal stress occurred in the optical waveguide formation region 10 is $\sigma$, its value can be expressed by the following equation (1) with the radius of warp, R of the substrate. The radius of warp, R is expressed in terms of meter.

$$\sigma = E_s\times b^2/(6\times(1-\nu_s)\times R\times d) \qquad (1)$$

In the above equation, $E_s$ is Young's modulus. When the substrate is silicon, the $E_s$ is $1.3\times10^{11}$ (Pa). Furthermore, the b is a thickness of the substrate. In this case, b is $1.0\times10^{-3}$ (m). The $\nu_s$ is Poisson's ratio of the substrate and is 0.28 in the case of the silicon substrate. The d is a thickness of clad glass, and in the case of the sample S1, it has the same thickness as the underclad 1b in one embodiment, that is, d is $0.02\times10^{-3}$ (m). In the case of the sample S2, it has the same thickness as the overclad 1a in one embodiment, that is, d is $0.03\times10^{-3}$ (m).

Furthermore, when thermal stress generated in the optical waveguide formation region 10 is $\sigma_T$, its value thereof is expressed by the following equation (2).

$$\sigma_T = E_g\times(\alpha_g-\alpha_s)\times\Delta T \qquad (2)$$

In the above equation, the $E_g$ is Young's modulus of the clad glass and $7.29\times10^{10}$ (Pa) in this case. The $\alpha_g$ is the thermal expansion coefficient of the clad glass. The $\alpha_s$ is the thermal expansion coefficient of the substrate and $3.0\times10^{-6}$ ((degrees Celsius)$^{-1}$) in the case of the silicon substrate 11. The $\Delta T$ expresses a temperature lowering from consolidation of the clad glass to room temperature and is 1000 degrees Celsius in one embodiment.

When the internal stress is assumed to be caused entirely by the thermal stress, since the $\sigma$ becomes equal to the $\sigma_T$, from the above equations (1) and (2), an equation (3) is derived.

$$\alpha_g = \alpha_s+(E_s\times b^2/(6\times E_g\times(1-\nu_s)\times R\times d\times\Delta T)) \qquad (3)$$

Furthermore, an amount of the warp is measured by use of a contact type surface contour measurement device. As a result, measurements are 7.8 m for the radius of warp, R of the substrate in the sample S1 and 258 m for that in the sample S2. That is, in the case of the underclad 1b, by substituting 7.8 for R in the equation (3), and in the case of the overclad 1a, by substituting 258 for R in the equation (3), the thermal expansion coefficients of the underclad 1b and that of the overclad 1a can be obtained, respectively.

The above-obtained thermal expansion coefficient $\alpha_g = \alpha_{uc}$ of the underclad 1b, as mentioned above, is

$1.0 \times 10^{-6}$, and that $\alpha_g = \alpha_{oc}$ of the overclad 1a is $2.95 \times 10^{-6}$.

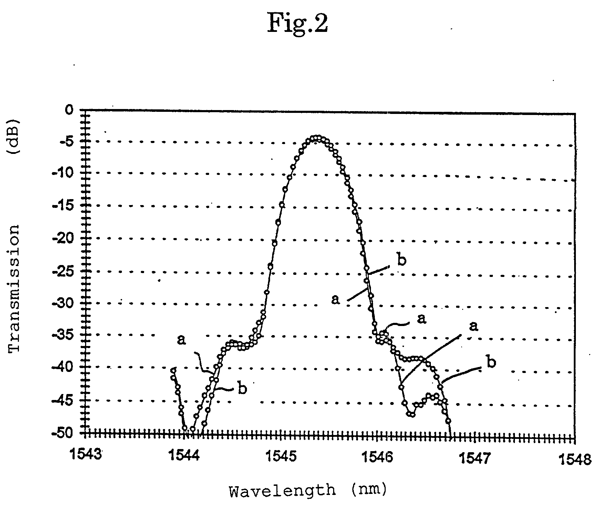

One embodiment is configured as mentioned above. In Fig. 2, measurements of a transmission spectrum for each of polarized waves in an arrayed waveguide grating according to one embodiment are shown. The transmission spectrum of the TE mode is shown as a characteristic curve a in Fig. 2, and that of TM mode is shown as a characteristic curve b in the same figure.

When these characteristic curves a and b are compared, it is found that a central wavelength of the TM mode transmission spectrum is shifted by 0.01 nm or less from that of the TE mode transmission spectrum. As shown in Fig. 7, a central wavelength of the TM mode transmission spectrum of the conventional example is shifted (separated) by substantially 0.20 nm from that of the TE mode transmission spectrum thereof. By comparing both, it is found that in the present embodiment, the shift of the central wavelength of the transmission spectrum between polarized wave modes is remarkably reduced.

As mentioned above, in one embodiment, by setting the thermal expansion coefficient of the overclad 1a that forms the optical waveguide as mentioned above and by setting the value B of the birefringence at an appropriate value, without providing the half wave plate 3, an optical waveguide that hardly shows an adverse influence of the polarization dependency attenuation and, accordingly, is suitable for the optical wavelength division multiplexing can be realized.

Furthermore, the optical waveguide of the present embodiment is cut out in a 30 mm square, and the pressure cooker test is applied on the cut out sample in an atmosphere of 120 degrees Celsius and 100% RH for 100 hrs. There is no crack or the like. That is, the optical waveguide of one embodiment can suppress occurrence of the cracks that are caused due to the moisture absorption, that is, can suppress characteristics deterioration.

As mentioned above, in one embodiment, an optical waveguide that, without providing a half wave plate, is almost free from an adverse influence of the polarization dependency attenuation and does not generate cracks even under the severe conditions of high temperature and high humidity can be realized.

Furthermore, since in one embodiment, the half wave plate is not necessary, the number of the fabricating process can be reduced, and the production yield can be improved, resulting in cost reduction.

Still furthermore, since in one embodiment, the half wave plate is not necessary, as needs arise, more than 320 channel waveguides with, for instance, 25 μm separation may be arranged side by side. That is, the number of the channel waveguides can be increased.

Since one embodiment shows the above advantageous effect, when the optical waveguide is applied to, for instance, 1.55 μm band optical wavelength division multiplexing, without providing a half wave plate, the polarization dependency attenuation may be suppressed from occurring and characteristics deterioration due to moisture absorption may be suppressed from occurring. As a result, a high quality optical wavelength division multiplexing system may be formed.

The present invention is not restricted to the one embodiment and can take various application modes. For instance, the compositions of the underclad 1b, the overclad 1a and the core 2 all of which forms the optical waveguide can be set appropriately without restricting to particular ones.

That is, these compositions may be appropriately set so that relationship between the thermal expansion coefficient of the substrate 11, $\alpha_s$, that of the underclad 1b, $\alpha_{uc}$, and that of the overclad 1a, $\alpha_{oc}$, that is, the $\alpha_{oc}$ is equal to or greater than ($\alpha_s - 2.0 \times 10^{-7}$) and is equal to or smaller than ($\alpha_s + 2.0 \times 10^{-7}$), and ($\alpha_{oc} - \alpha_{uc}$) is equal to or smaller than ($21.5 \times 10^{-7}$), may be satisfied. In addition, the compositions of the underclad 1b, the overclad 1a and the core 2 are appropriately set so that the refractive index of the core 2 may be greater than that of the clad 1.

Furthermore, although in the one embodiment, the optical waveguide is an arrayed waveguide grating, the optical waveguide is not necessarily restricted to the arrayed waveguide grating. The present invention may be applied to various optical waveguides in which an optical waveguide formation region 10 that has an underclad 1b, a core 2, and an overclad 1a is formed on a substrate 11.

Still furthermore, although in the embodiment, a silicon substrate is taken as the substrate 11, the substrate 11 is not restricted to silicon and an appropriate substrate, such as, for instance, a sapphire substrate, may be applied.

## Claims

**1.** An optical waveguide, comprising:

a substrate;
an underclad formed on the substrate;
a core formed on the underclad; and
an overclad covering the core, wherein,
a thermal expansion coefficient of the substrate being $\alpha_s$, a thermal expansion coefficient of the underclad

being $\alpha_{uc}$, and a thermal expansion coefficient of the overclad being $\alpha_{oc}$,

$\alpha_{oc}$ is equal to or greater than ($\alpha_s$-2.0$\times$10$^{-7}$) and equal to or smaller than ($\alpha_s$+2.0$\times$10$^{-7}$), and ($\alpha_{oc}$-$\alpha_{uc}$) is equal to or smaller than (21.5$\times$10$^{-7}$).

**2.** An optical waveguide as set forth in claim 1, wherein:

the core of the optical waveguide is configured as an arrayed waveguide grating circuit, the arrayed waveguide grating circuit, comprising

at least one input waveguide,
a first slab waveguide connected to an exit side of the input waveguide,
an arrayed waveguide that is connected to an exit side of the first slab waveguide and made of a plurality of channel waveguides arranged side by side with lengths different by a predetermined amount from each other,
a second slab waveguide connected to an exit side of the arrayed waveguide, and

a plurality of output waveguides arranged side by side at an exit side of the second slab waveguide.

**3.** An optical waveguide as set forth in claim 1, wherein: the substrate is a silicon substrate.

**4.** An optical waveguide as set forth in claim 2, wherein: the substrate is a silicon substrate.

**5.** An optical waveguide as set forth in claim 2, wherein:
said overclad is doped with at least one of $B_2O_3$ and $P_2O_5$.

**6.** An optical waveguide as set forth in claim 2, wherein:
said overclad includes a $SiO_2$-$B_2O_3$-$P_2O_5$ base material.

**7.** An optical waveguide as set forth in claim 2, wherein:
said underclad includes a $SiO_2$-$B_2O_3$-$P_2O_5$ glass.

**8.** An optical waveguide as set forth in claim 2, wherein:
said core includes a $SiO_2$-$B_2O_3$-$P_2O_5$-$GeO_2$ glass.

**9.** An optical waveguide as set forth in claim 8, wherein;
said $SiO_2$-$B_2O_3$-$P_2O_5$-$GeO_2$ glass has a 0.8% relative refractive index.

**10.** An optical waveguide as set forth in claim 2, wherein:
said optical waveguide is configured to operate without a half wave plate.

**11.** An optical waveguide, comprising:

a substrate;
an underclad formed on the substrate;
a core formed on the underclad;
an overclad covering the core; and
means for suppressing cracks in said overclad due to thermally induced tensile stress.

**12.** An optical waveguide as set forth in claim 11, wherein:
said means for suppressing includes means for matching a thermal coefficient of expansion in said overclad and said underclad.

**13.** An optical waveguide as set forth in claim 12, wherein:
said overclad includes a $SiO_2$-$B_2O_3$-$P_2O_5$ base material.

**14.** An optical waveguide as set forth in claim 12, wherein:
said underclad includes a $SiO_2$-$B_2O_3$-$P_2O_5$ glass.

**15.** An optical waveguide as set forth in claim 12, wherein:
said core includes a $SiO_2$-$B_2O_3$-$P_2O_5$-$GeO_2$ glass.

**16.** An optical waveguide as set forth in claim 15, wherein:
said $SiO_2$-$B_2O_3$-$P_2O_5$-$GeO_2$ glass has a 0.8% relative refractive index.

**17.** An optical waveguide as set forth in claim 11, wherein:
said optical waveguide is configured to operate without a half wave plate.

Fig.1

λ1, λ2, λ3, ··· λn

14a
14a
13
14
12
10
11
14a
14a
15
16
16
16
16 16 16 16
12

λ1 λ2 λ3 λn

EP 1 273 936 A2

Fig.2

## Fig.3

End Surface   Crack   1a

1b

## Fig.4

Tensile Stress   Compression Stress   1a

1b

Fig.5

Fig.6A

Fig.6B

Fig.6C

Fig.6D

Fig.7

Fig.8